# EUROPEAN PATENT APPLICATION

(11) **EP 4 807 653 A1**
(43) Date of publication of application: **16.09.2026**
(21) Application number: 25192048.4
(22) Date of filing: 28.07.2025
(51) Int. Cl.: G06Q 30/0207, G06Q 30/0251, G06Q 30/02, G07F 9/00, G07F 9/02

(54) **INFORMATION PROCESSING SYSTEM, PROGRAM, AND INFORMATION PROCESSING METHOD**

(30) Priority: 14.03.2025 JP 2025041901
(71) Applicant: FUJIFILM Business Innovation Corp., Minato-ku Tokyo (JP)
(72) Inventor: NOGAMI, Kazuma, Yokohama-shi, Kanagawa (JP)
(74) Representative: Becker Kurig & Partner Patentanwälte mbB

(57) **Abstract**

An information processing system includes: a mobile terminal device including a first processor configured to: acquire sales information of a capsule product sold by a vending machine that is not connected to a commercial power supply and sells a capsule product in which a product is enclosed in a capsule via a near field communication line from the vending machine, and transmit the sales information together with user information of the mobile terminal device to an external device; and a server device including a second processor configured to: provide each user, via the mobile terminal device, with information about a store in which the capsule product or the vending machine that sells the capsule product is installed, using the user information and the sales information transmitted by the mobile terminal device.

## Description

### BACKGROUND OF THE INVENTION

### (i) Field of the Invention

The present disclosure relates to an information processing system, a program, and an information processing method.

### (ii) Description of Related Art

Vending machines that sell capsule products in which products are enclosed in capsules are installed in various stores. For example, JP2004-295817A discloses a non-powered vending machine that uses power supplied by a battery to detect the sale of an item, generate sales information, and output the generated sales information to the outside.

### SUMMARY OF THE INVENTION

Such vending machines are generally not connected to a commercial power supply, and it is not possible to ascertain which user has purchased what kind of capsule product. Therefore, it was not possible to provide various types of information to users who purchase capsule products, such as information that new capsule products have been released, or that a vending machine selling the newly released capsule products has been installed in a store that the user frequently visits.

An object of the disclosed technology is to provide an information processing system, a program, and an information processing method capable of providing a user who purchases a capsule product with information according to a past purchase history.

According to a first aspect of the present disclosure, there is provided an information processing system including a mobile terminal device including a first processor configured to: acquire sales information of a capsule product sold by a vending machine that is not connected to a commercial power supply and sells a capsule product in which a product is enclosed in a capsule via a near field communication line from the vending machine, and transmit the sales information together with user information of the mobile terminal device to an external device; and a server device including a second processor configured to: provide each user, via the mobile terminal device, with information about a store in which the capsule product or the vending machine that sells the capsule product is installed, using the user information and the sales information transmitted by the mobile terminal device.

According to a second aspect of the present disclosure, in the information processing system according to the first aspect, the second processor may be configured to provide each user, via the mobile terminal device, with information about capsule products similar to capsule products previously purchased by users ascertained by the sales information transmitted by the mobile terminal device.

According to a third aspect of the present disclosure, in the information processing system according to the second aspect, the second processor may be configured to provide each user, via the mobile terminal device, with information about a store in which a vending machine that sells the capsule product about which the information has been provided to the user is installed.

According to a fourth aspect of the present disclosure, in the information processing system according to any one of the first to third aspects, the sales information may include identification information of the vending machine from which the sales information has been acquired, identification information of the capsule product sold by the vending machine, identification information of the store in which the vending machine is installed, and information about a sales number of capsule products sold by the vending machine.

According to a fifth aspect of the present disclosure, the information processing system according to any one of the first to fourth aspects may further include at least one vending machine that includes a third processor, and an identification unit that identifies an individual type of a sold capsule product, and that is not connected to a commercial power supply and sells a capsule product, in which the third processor may be configured to include information about the individual type of the capsule product identified by the identification unit in the sales information and store the sales information in a storage unit that stores information to be transmitted to the mobile terminal device.

According to a sixth aspect of the present disclosure, in the information processing system according to the fifth aspect, the identification unit may identify the individual type of the capsule product by reading information of a wireless IC tag enclosed in the capsule.

According to a seventh aspect of the present disclosure, in the information processing system according to the fifth aspect, the identification unit may identify the individual type of the capsule product by reading a color of the capsule of the sold capsule product.

According to an eighth aspect of the present disclosure, in the information processing system according to the fifth aspect, the identification unit may identify the individual type of the capsule product by reading identification information attached to the capsule of the sold capsule product.

According to a ninth aspect of the present disclosure, there is provided a program for causing a computer to execute: acquiring sales information of a capsule product sold by a vending machine that is not connected to a commercial power supply and sells a capsule product in which a product is enclosed in a capsule via a near field communication line from the vending machine, and transmitting the sales information together with user information of a mobile terminal device to an external device; and providing each user, via the mobile terminal device, with information about a store in which the capsule product or the vending machine that sells the capsule product is installed, using the user information and the sales information transmitted by the mobile terminal device.
According to a tenth aspect of the present disclosure, there is provided an information processing method including: acquiring sales information of a capsule product sold by a vending machine that is not connected to a commercial power supply and sells a capsule product in which a product is enclosed in a capsule via a near field communication line from the vending machine, and transmitting the sales information together with user information of a mobile terminal device to an external device; and providing each user, via the mobile terminal device, with information about a store in which the capsule product or the vending machine that sells the capsule product is installed, using the user information and the sales information transmitted by the mobile terminal device.

With the information processing system according to the first aspect of the present disclosure, it is possible to provide a user who purchases a capsule product with information according to a past purchase history.

With the information processing system according to the second aspect of the present disclosure, it is possible to provide a user who purchases a capsule product with information about capsule products that may match a preference of the user.

With the information processing system according to the third aspect of the present disclosure, it is possible to allow a user to ascertain which store to go to in order to purchase a capsule product about which information has been provided to the user.

With the information processing system according to the fourth aspect of the present disclosure, it is possible to manage an inventory status of each capsule product in the store in which the vending machine is installed.

With the information processing system according to the fifth aspect of the present disclosure, it is possible to provide a user who purchases a capsule product with information according to the individual type of the sold capsule product.

With the information processing system according to the sixth aspect of the present disclosure, it is possible to identify the individual type of the sold capsule product simply by enclosing a wireless IC tag inside the capsule.

With the information processing system according to the seventh aspect of the present disclosure, it is possible to identify the individual type of the sold capsule product simply by changing the color of the capsule for each individual type of the capsule product.

With the information processing system according to the eighth aspect of the present disclosure, it is possible to identify the individual type of the sold capsule product simply by attaching identification information for each individual type of the capsule product to the capsule.

With the program according to the ninth aspect of the present disclosure, it is possible to provide a user who purchases a capsule product with information according to a past purchase history.
With the information processing method according to the tenth aspect of the present disclosure, it is possible to provide a user who purchases a capsule product with information according to a past purchase history.

### BRIEF DESCRIPTION OF THE DRAWINGS

Exemplary embodiment(s) of the present invention will be described in detail based on the following figures, wherein: [0024]
FIG. 1 is a diagram showing a system configuration of an information processing system according to a first exemplary embodiment of the present disclosure;
FIG. 2 is a block diagram showing a hardware configuration of a capsule toy vending machine 10 according to the first exemplary embodiment of the present disclosure;
FIG. 3 is a diagram showing a hardware configuration of a mobile terminal device 20 according to the first exemplary embodiment of the present disclosure;
FIG. 4 is a block diagram showing a functional configuration of the mobile terminal device 20 according to the first exemplary embodiment of the present disclosure;
FIG. 5 is a diagram showing a state in which sales information is transmitted and received between the capsule toy vending machine 10 and the mobile terminal device 20;
FIG. 6 is a diagram showing a state in which a user acquires sales information from the capsule toy vending machine 10 at the start of a purchase;
FIG. 7 is a diagram showing a state in which the user acquires sales information from the capsule toy vending machine 10 at the end of the purchase;
FIG. 8 is a diagram showing a hardware configuration of a server device 40 according to the first exemplary embodiment of the present disclosure;
FIG. 9 is a block diagram showing a functional configuration of the server device 40 according to the first exemplary embodiment of the present disclosure;
FIG. 10 is a diagram showing an example of a sales information management DB stored in a sales information management DB storage unit 55;
FIG. 11 is a diagram showing an example of a notification screen of the mobile terminal device 20 in a case of notifying a user of information about a newly released capsule toy and information about a store in which a capsule toy vending machine where the capsule toy can be purchased is installed;
FIG. 12 is a block diagram showing a hardware configuration of a capsule toy vending machine 10A according to a second exemplary embodiment of the present disclosure;
FIG. 13 is a diagram showing a state in which a user acquires sales information from the capsule toy vending machine 10A at the end of a purchase; and
FIG. 14 is a diagram showing an example of a sales information management DB stored in a sales information management DB storage unit 55.

### DETAILED DESCRIPTION OF THE INVENTION

Hereinafter, an exemplary embodiment of the present disclosure will be described in detail with reference to the drawings.

In recent years, capsule toy vending machines that sell capsule products in which products such as toys are enclosed in capsules have been installed in various stores such as shopping centers. However, such capsule toy vending machines are generally not connected to a commercial power supply, and it is not possible to ascertain which user has purchased what kind of capsule toy. Therefore, it was not possible to provide various types of information to users who purchase capsule toys, such as information that new capsule toys have been released, or that a capsule toy vending machine selling the newly released capsule toys has been installed in a store that the user frequently visits.

Therefore, in the information processing system according to the present exemplary embodiment, by configuring as described below, it is possible to provide information according to past purchase history to users who purchase capsule products such as capsule toys.

### [First Exemplary Embodiment]

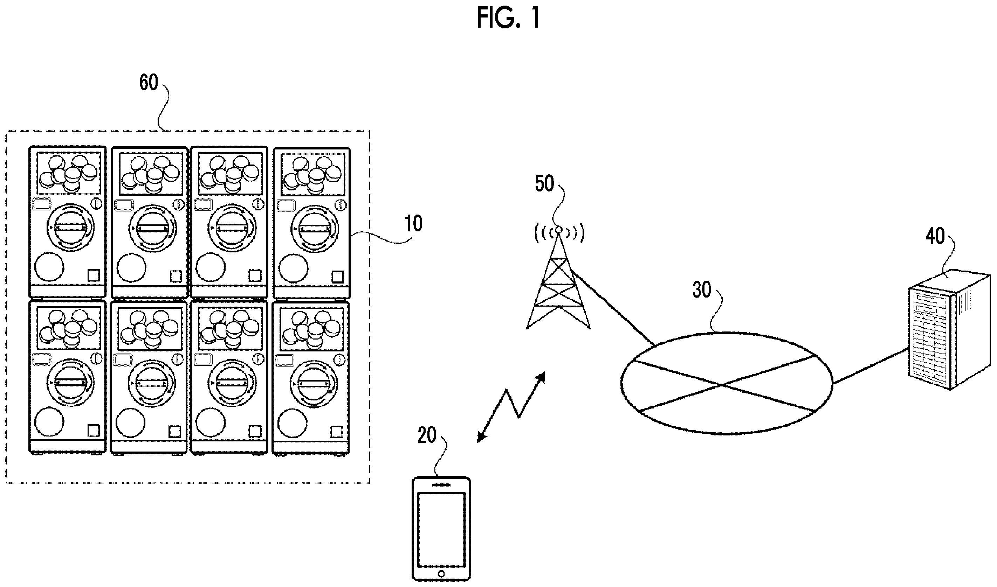

FIG. 1 shows a system configuration of an information processing system according to a first exemplary embodiment of the present disclosure. As shown in FIG. 1, the information processing system according to the present exemplary embodiment includes a plurality of capsule toy vending machines 10 set up in a store 60, a mobile terminal device 20 such as a smartphone, and a server device 40. The mobile terminal device 20 is connected to the Internet 30 via a mobile communication network 50. Then, the mobile terminal device 20 and the server device 40 are connected via the Internet 30 to be able to communicate with each other. The server device 40 manages the sales of capsule toys sold by the plurality of capsule toy vending machines 10 installed in the store 60.

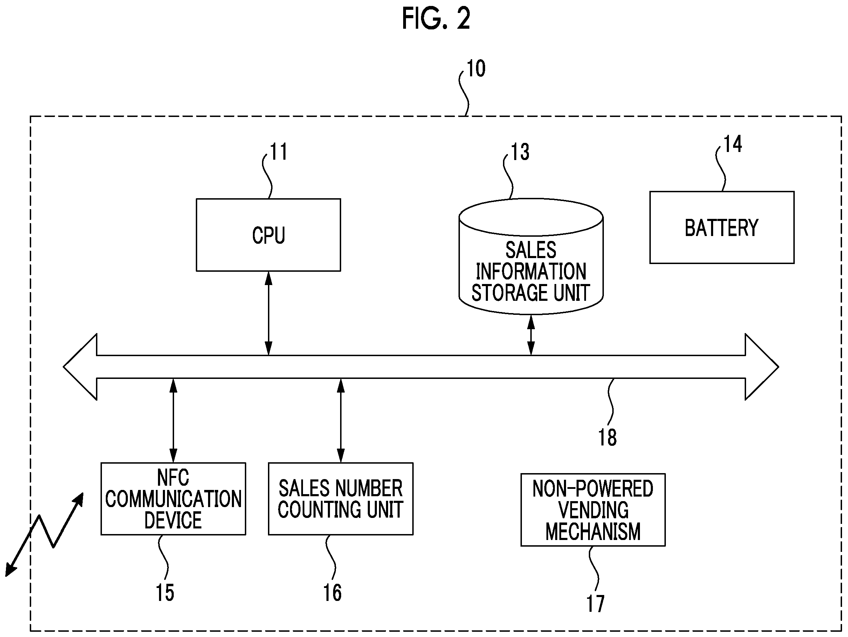

Next, FIG. 2 shows a hardware configuration of the capsule toy vending machine 10 in the information processing system according to the present exemplary embodiment.

The capsule toy vending machine 10 is a vending machine that is not connected to a commercial power supply and sells capsule products in which products such as toys are enclosed in capsules. As shown in FIG. 2, the capsule toy vending machine 10 has a CPU 11, a memory 12, a sales information storage unit 13, a battery 14, a near field communication (NFC) communication device 15, a sales number counting unit 16, and a non-powered vending mechanism 17. The CPU 11, the memory 12, the sales information storage unit 13, the battery 14, the NFC communication device 15, and the sales number counting unit 16 are connected to each other via a control bus 18.

The non-powered vending mechanism 17 sells capsule toys by dispensing the stored capsule toys in accordance with the number of coins inserted. The non-powered vending mechanism 17 is not supplied with power from an external source, and in a case in which a set number of coins are inserted, non-powered vending mechanism 17 becomes rotatable by a human operation, and dispenses capsule toys from an outlet to be sold.

The battery 14 supplies power to the CPU 11, the memory 12, the sales information storage unit 13, the NFC communication device 15, and the sales number counting unit 16. In addition, the non-powered vending mechanism 17 may be configured to generate electricity in a case of being rotated by a human operation, and supply the power to the battery 14 to be charged.

The NFC communication device 15 transmits and receives data to and from external devices via a near field communication line.

The sales number counting unit 16 counts the sales number of capsule toys sold by the non-powered vending mechanism 17 by detecting the falling of the capsule toys in a case in which the capsule toys are sold using a pressure sensor or the like.

The CPU 11 stores the sales number of capsule toys counted by the sales number counting unit 16 in the sales information storage unit 13. Note that the sales number stored in the sales information storage unit 13 is reset to "0" in a case in which, for example, the capsule toy vending machine 10 is replenished with capsule toys. Therefore, the sales number of capsule toys is the total number of capsule toys sold from the capsule toy vending machine 10 after the sales number was reset.

Also, the sales information storage unit 13 stores information such as a device ID, a store ID, and a product ID. Here, the device ID is identification information for individually identifying the capsule toy vending machine 10. This device ID is different identification information for each of the plurality of capsule toy vending machines 10. The store ID is identification information of the store 60 in which the capsule toy vending machine 10 is installed. In other words, the same store ID is stored in a plurality of capsule toy vending machines installed in the same store 60. Also, the product ID is identification information for identifying the type of capsule toy being sold by the capsule toy vending machine 10.

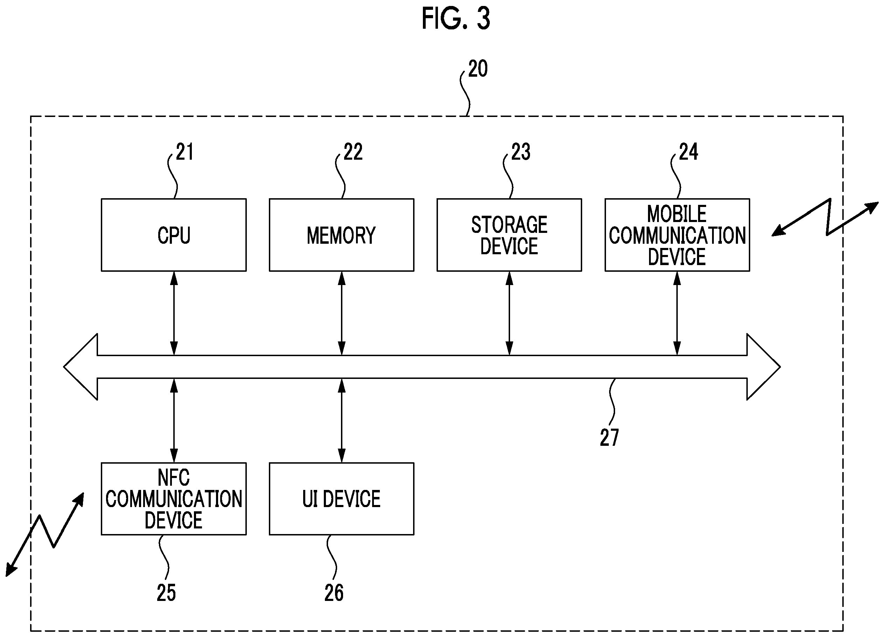

Next, FIG. 3 shows a hardware configuration of the mobile terminal device 20.

As shown in FIG. 3, the mobile terminal device 20 has a CPU 21, a memory 22, a storage device 23 such as a flash memory, a mobile communication device 24 that transmits and receives data to and from external devices via the mobile communication network 50, an NFC communication device 25, and a user interface (abbreviated as a UI) device 26 consisting of a touch panel. These components are connected to each other via a control bus 27.

The CPU 21 is a processor that executes predetermined processing based on a control program stored in the memory 22 or the storage device 23 to control an operation of the mobile terminal device 20. Note that, in the present exemplary embodiment, the description has been made in which the CPU 21 reads out and executes the control program stored in the memory 22 or the storage device 23, but the present disclosure is not limited thereto. The control program may be provided in a form recorded on a computer-readable recording medium. For example, the program may be provided in the form of a recording on an optical disc such as a compact disc (CD)-ROM and a digital versatile disc (DVD)-ROM or in the form of a recording on a semiconductor memory such as a universal serial bus (USB) memory and a memory card. In addition, the control program may be acquired from an external device via the mobile communication line through the mobile communication device 24. Furthermore, the control program may be provided, for example, as single application software or may be incorporated, as one function of the mobile terminal device 20, in software of each apparatus.

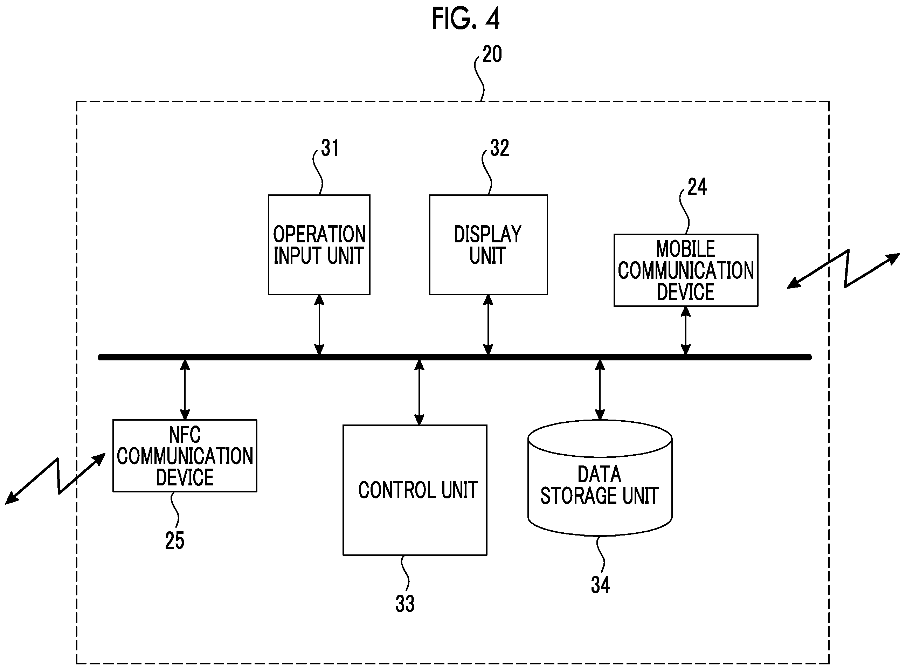

FIG. 4 is a block diagram showing a functional configuration of the mobile terminal device 20 realized by executing the above control program.

As shown in FIG. 4, the mobile terminal device 20 according to the present exemplary embodiment includes an operation input unit 31, a display unit 32, the mobile communication device 24, the NFC communication device 25, a control unit 33, and a data storage unit 34.

The display unit 32 is controlled by the control unit 33 and displays various types of information to the user. The operation input unit 31 inputs information about various operations performed by the user. Then, the operation input unit 31 and the display unit 32 form a touch panel.

The control unit 33 acquires sales information from the capsule toy vending machine 10 through a near field communication line via the NFC communication device 25 and stores the sales information in the data storage unit 34. Then, the control unit 33 adds a user ID of the mobile terminal device and the current time information to the sales information stored in the data storage unit 34 and transmits the added information to the server device 40 through the mobile communication network 50 and the Internet 30 via the mobile communication device 24.

In this way, the control unit 33 of the mobile terminal device 20 acquires sales information of the capsule toys sold by the capsule toy vending machine 10 from the capsule toy vending machine 10 via a near field communication line, and transmits the sales information together with user information such as the user ID of the mobile terminal device 20 to the external device, that is, the server device 40.

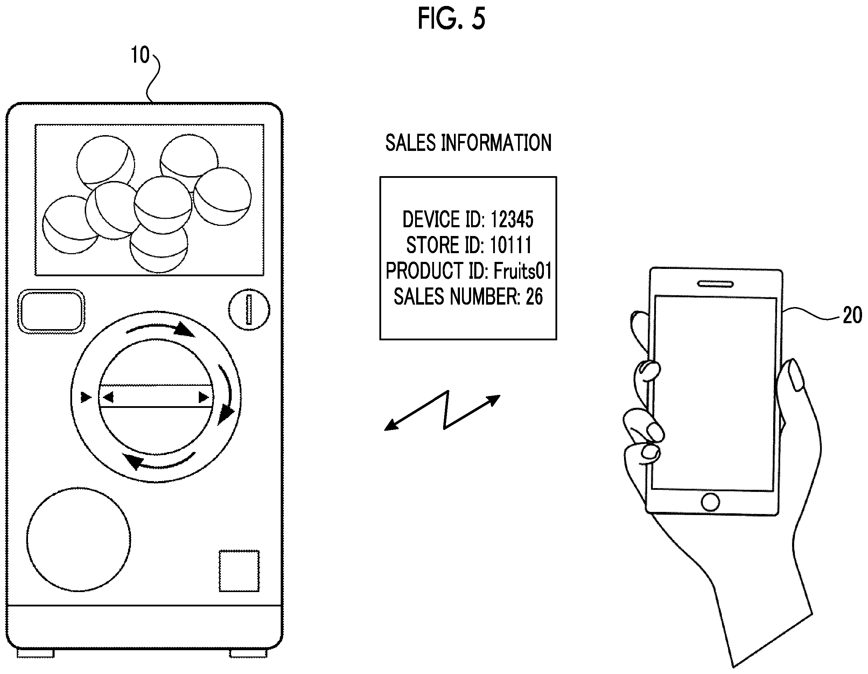

FIG. 5 shows a state in which sales information is transmitted and received between the capsule toy vending machine 10 and the mobile terminal device 20 configured as described above.

FIG. 5 shows a state in which the sales information stored in the sales information storage unit 13 of the capsule toy vending machine 10 is transmitted to the mobile terminal device 20 in a case in which the user taps the mobile terminal device 20 on the capsule toy vending machine 10. This sales information includes information about the device ID of the capsule toy vending machine that acquired the sales information, the product ID of the capsule toy being sold, the store ID, and the sales number.

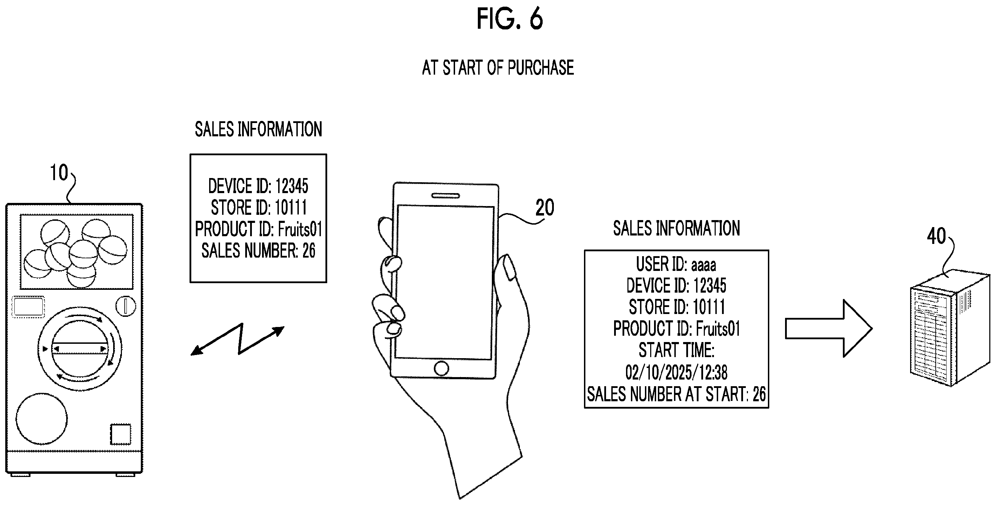

An application program (hereinafter abbreviated as an "application") for supporting the purchase of capsule toys is installed in the mobile terminal device 20. In a case in which a user goes to a store 60 where the capsule toy vending machines 10 are installed and attempts to purchase a capsule toy from a certain capsule toy vending machine 10, the application prompts the user to acquire sales information from the capsule toy vending machine 10. FIG. 6 shows a state in which the user acquires sales information from the capsule toy vending machine 10 at the start of a purchase.

FIG. 6 shows a state in which, in a case in which a user brings the mobile terminal device 20 close to the capsule toy vending machine 10 to acquire sales information, the acquired sales information is added with the user ID of the user and the time information at the start of the purchase, and then transferred to the server device 40.

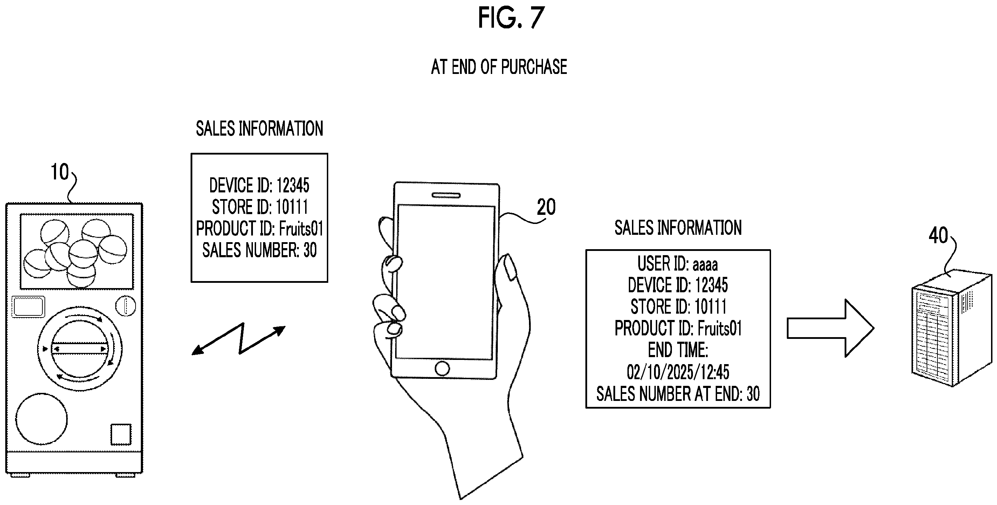

In a case in which a user who has purchased a capsule toy from the capsule toy vending machine 10 leaves the capsule toy vending machine 10, the application prompts the user to acquire sales information again. FIG. 7 shows a state in which the user acquires sales information from the capsule toy vending machine 10 at the end of the purchase.

FIG. 7 shows a state in which, in a case in which the user brings the mobile terminal device 20 close to the capsule toy vending machine 10 to acquire sales information, the acquired sales information is added with the user ID of the user and the time information at the end of the purchase, and then transferred to the server device 40.

Next, an operation of the server device 40 to which the sales information is thus transmitted from the mobile terminal device 20 will be described.

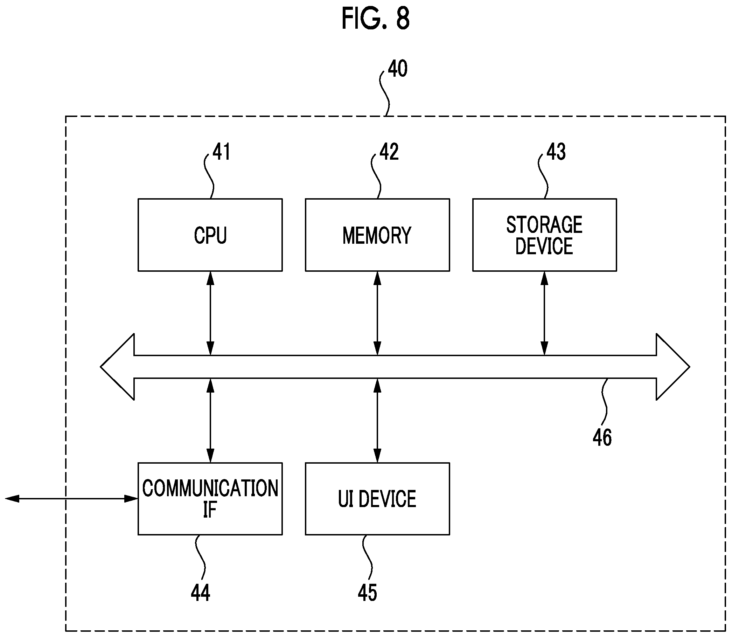

First, FIG. 8 shows a hardware configuration of the server device 40.

As shown in FIG. 8, the server device 40 has a CPU 41, a memory 42, a storage device 43 such as a hard disk or a flash memory, a communication interface (IF) 44, and a user interface (abbreviated as a UI) device 45 consisting of a keyboard, a touch panel, or the like. These components are connected to each other via a control bus 46.

The CPU 41 is a processor that controls the operation of the server device 40 by executing a predetermined process based on a control program stored in the memory 42 or the storage device 43. Note that, in the present exemplary embodiment, the CPU 41 reads the control program stored in the memory 42 or the storage device 43 and executes the control program, but the present disclosure is not limited thereto. The control program may be provided in a form recorded on a computer-readable recording medium. For example, the program may be provided in the form of a recording on an optical disc such as a compact disc (CD)-ROM and a digital versatile disc (DVD)-ROM or in the form of a recording on a semiconductor memory such as a universal serial bus (USB) memory and a memory card. Moreover, the control program may be acquired from an external device via a communication line through the communication IF 44. Further, the control program may be provided, for example, as single application software or may be incorporated, as one function of the server device 40, in software of each apparatus.

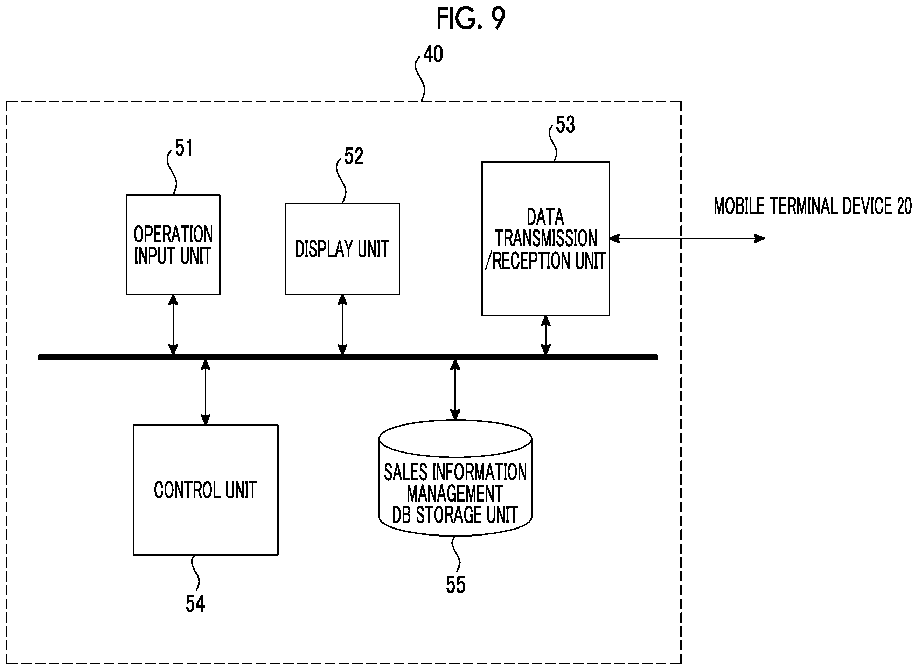

FIG. 9 is a block diagram showing a functional configuration of the server device 40 realized by executing the above control program.

As shown in FIG. 9, the server device 40 according to the present exemplary embodiment includes an operation input unit 51, a display unit 52, a data transmission/reception unit 53, a control unit 54, and a sales information management database (DB) storage unit 55.

The display unit 52 is controlled by the control unit 54 and displays various types of information to a user. The operation input unit 51 inputs information about various operations performed by the user. The data transmission/reception unit 53 transmits and receives data to and from the mobile terminal device 20 via the Internet 30 and the mobile communication network 50.

The control unit 54 receives sales information transmitted from the mobile terminal device 20, creates a sales information management DB using the received sales information, and stores the sales information management DB in the sales information management DB storage unit 55.

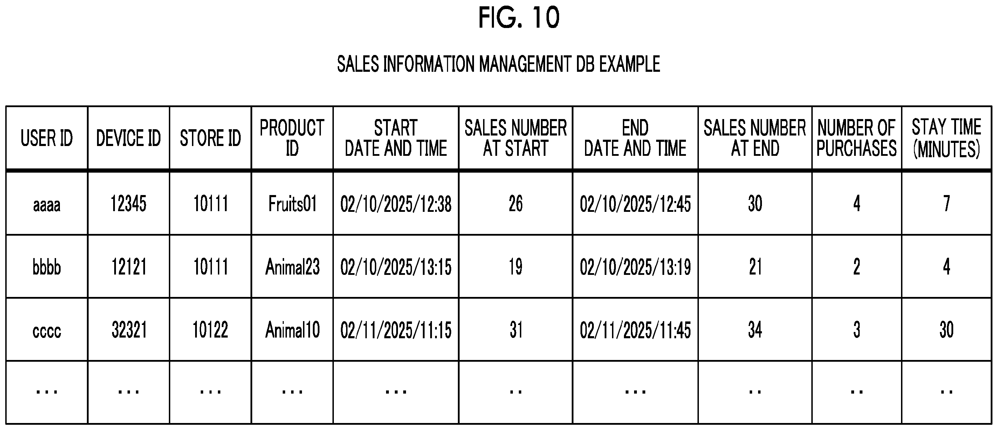

Next, FIG. 10 shows an example of the sales information management DB stored in the sales information management DB storage unit 55.

The sales information management DB shown in FIG. 10 is composed of the following items: a user ID, a device ID, a store ID, a product ID, a start date and time, the sales number at the start, the end date and time, the sales number at the end, the number of purchases, and a stay time. Here, the number of purchases is calculated as the difference between the sales number at the end and the sales number at the start. The stay time is also calculated as the difference between the start date and time and the end date and time.

By referring to the sales information management DB, it can be seen that a user with user ID "aaaa" purchased four capsule toys with product ID "Fruits01" at a capsule toy vending machine with device ID "12345" installed in a store with store ID "10111".

Then, the control unit 54 of the server device 40 uses the user information and the sales information transmitted by the mobile terminal device 20 to provide each user, via the mobile terminal device 20, with information about a store 60 in which capsule toys or a capsule toy vending machine 10 that sells capsule toys is installed.

For example, the control unit 54 provides each user, via the mobile terminal device 20, with information about capsule toys similar to capsule toys previously purchased by users ascertained from the sales information transmitted by the mobile terminal device 20. Also, for example, the control unit 54 provides each user, via the mobile terminal device 20, with information about the store 60 in which the capsule toy vending machine 10 that sells the capsule toy about which information has been provided to the user is installed.

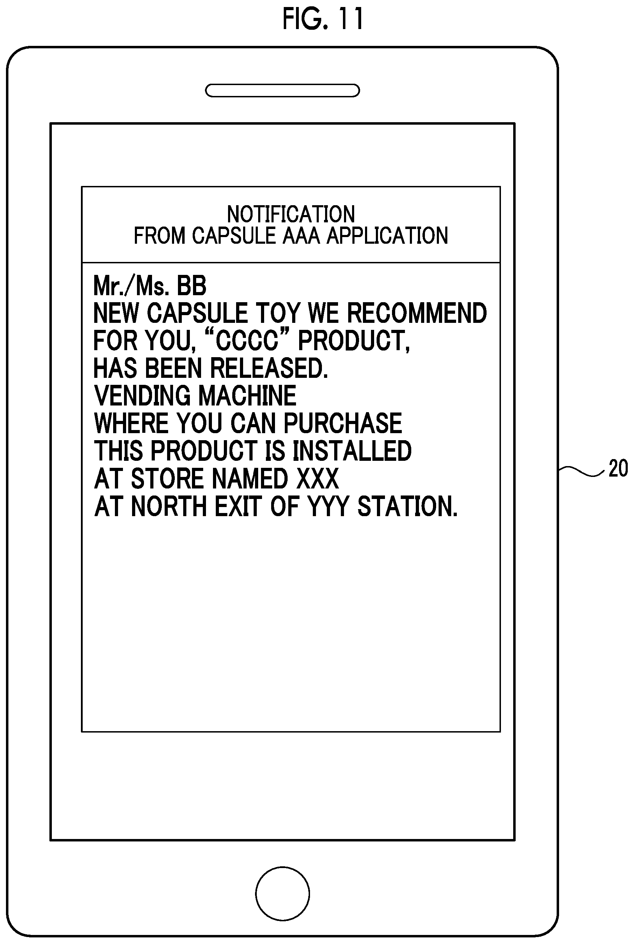

FIG. 11 shows an example of a notification screen of the mobile terminal device 20 in a case of notifying a user of information about a newly released capsule toy and information about a store in which a capsule toy vending machine where the capsule toy can be purchased is installed.

The example of the notification screen shown in FIG. 11 shows a state in which the user is notified through the application, the information that a new capsule toy similar to the capsule toy previously purchased by the user has been released, along with information about the installation location in which a capsule toy vending machine where the capsule toy can be purchased is installed. Here, a capsule toy being similar to another capsule toy means that the capsule toy and the other capsule toy are in the same category, in the same series, or of a similar type, for example. For example, it is determined that a train capsule toy and a Shinkansen capsule toy are similar.

In this manner, in the information processing system according to the present exemplary embodiment, sales information from the capsule toy vending machine 10 is acquired and transmitted to the server device 40 through the mobile terminal device 20. Therefore, it is possible to ascertain which user purchased what kind of capsule toy from which store's capsule toy vending machine 10. As a result, by referring to the sales information management DB managed in the server device 40, it is possible to provide information according to the past purchase history to a user who purchases a capsule toy.

Furthermore, by using the information in the sales information management DB, business operators that manufacture capsule toys can grant, to each user, a benefit according to the number of capsule toys purchased. For example, a service at the store in which the capsule toy vending machine 10 is installed can be granted to the user, or the opportunity to apply for a special prize can be granted to the user. Services at a store include, for example, granting the right to use a special capsule toy vending machine 10 that is exclusive to heavy users, granting the right to use a capsule toy vending machine free of charge once, and offering discounts on the purchase price of capsule toys. In this way, by giving each user an incentive according to the number of purchases of capsule toys, it is expected that an increase in the number of users who use the store in which the capsule toy vending machine 10 is installed will occur.

In addition, business operators that manufacture capsule toys will be able to provide advertisements for new products on the application that are close to a preference of the user, based on the capsule toy trends that users have purchased. This will also lead to strengthening a user contact point.

Furthermore, by using the information in the sales information management DB, it is possible to ascertain the capsule toy inventory status of each store and place additional orders for capsule toys. It is also possible to ascertain the sales status of each type of capsule toy at each store, which makes it possible to suppress the occurrence of excess inventory at the store.

In the above exemplary embodiment, it is necessary for the user to install an application on his/her mobile terminal device 20 and acquire sales information from the capsule toy vending machine 10 and transmit the sales information to the server device 40 when purchasing a capsule toy. However, in a case in which the user does not perform the operation to collect and transmit sales information in purchasing a capsule toy, the sales information cannot be acquired. In a case in which any user acquires sales information from the capsule toy vending machine 10, at least information about the sales number can be acquired. However, in a case in which there is a capsule toy vending machine 10 from which no users acquire sales information, it is not possible to ascertain the sales number of the capsule toy vending machines 10.

Therefore, a user ID for an administrator may be set so that the administrator can operate the mobile terminal device 20 to acquire sales information of the capsule toy vending machine 10 and transmit the sales information to the server device 40. In this way, in a case in which an administrator periodically acquires sales information from the capsule toy vending machine 10 in the store 60 and transmits the sales information to the server device 40, it is possible to collect the inventory number and sales amount of capsule toys in the store 60.

### [Second Exemplary Embodiment]

Next, an information processing system according to a second exemplary embodiment of the present disclosure will be described.

The information processing system according to the first exemplary embodiment described above is capable of ascertaining which user has purchased what type of capsule toy, but is not capable of acquiring information about the individual types of capsule toys. Here, the individual type of capsule toy means a specific individual type of the capsule toy. For example, in the type of capsule toy called "sea creatures", individual types include a "whale", a "tuna", a "dolphin", and the like.

In the first exemplary embodiment, a product ID is set for each type of capsule toy, and thus it is not possible to ascertain whether the capsule toy a user has purchased is a "whale" or a "tuna". Therefore, the information processing system according to the present exemplary embodiment is configured as follows, and thus the user can ascertain information about the individual types of capsule toys that the user has purchased.

The information processing system according to the present exemplary embodiment is configured such that the capsule toy vending machine 10 of the information processing system according to the first exemplary embodiment described above is replaced with a capsule toy vending machine 10A.

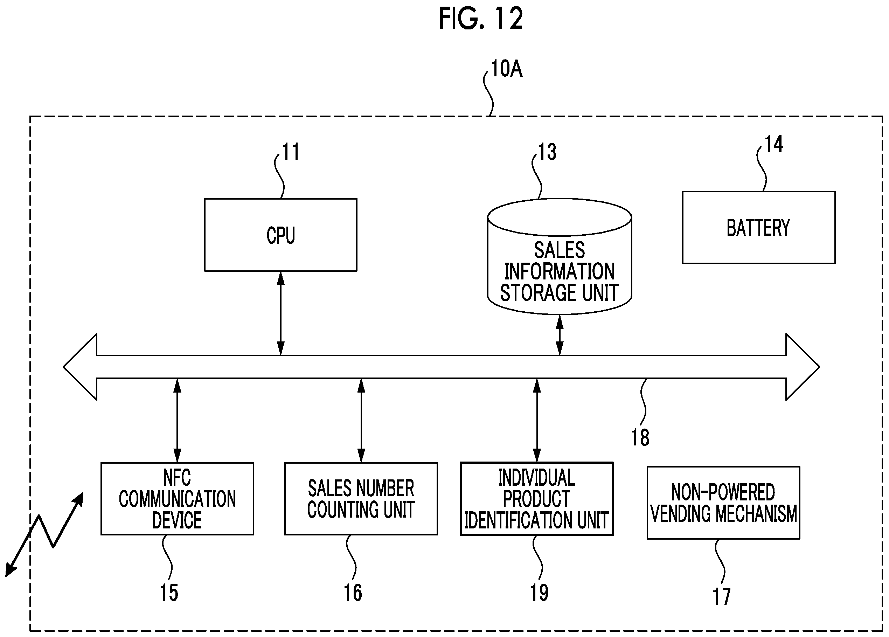

FIG. 12 is a block diagram showing a hardware configuration of the capsule toy vending machine 10A according to the present exemplary embodiment.

The capsule toy vending machine 10A according to the present exemplary embodiment has a configuration in which an individual product identification unit 19 is added to the configuration of the capsule toy vending machine 10 shown in FIG. 2.

The individual product identification unit 19 identifies individual types of capsule toys sold by the non-powered vending mechanism 17.

Then, the CPU 11 includes information about the individual type of the capsule toy identified by the individual product identification unit 19 in the sales information and stores the sales information in the sales information storage unit 13, which stores information to be transmitted to the mobile terminal device 20.

Here, the individual product identification unit 19 identifies the individual type of the capsule toy, for example, by reading information of a wireless IC tag enclosed in the capsule. In this case, a wireless IC tag storing identification information indicating the individual type of the enclosed capsule toy is simultaneously enclosed in the capsule of each capsule toy. In a case in which a capsule toy is sold by the non-powered vending mechanism 17, the individual product identification unit 19 reads the information of the wireless IC tag enclosed in the capsule and identifies the individual type of the capsule toy sold.

Alternatively, the individual product identification unit 19 may identify the individual type of the capsule toy by reading the color of the capsule of the sold capsule toy. In this case, the color of the capsule will be changed depending on the individual type of the capsule toy that is enclosed. The capsules may be different colors, such as green for a "lion", red for an "elephant", and yellow for a "giraffe", for example. In a case in which a capsule toy is sold by the non-powered vending mechanism 17, the individual product identification unit 19 reads the color of the capsule and identifies the individual type of the capsule toy sold.

Furthermore, the individual product identification unit 19 may identify the individual type of the capsule product by reading the identification information attached to the capsule of the sold capsule product. Specifically, information indicating the individual type of the capsule toy enclosed in the capsule is included in identification information such as one-dimensional information such as a barcode or a two-dimensional code such as a QR code (registered trademark) and is attached to the outside of the capsule. In a case in which a capsule toy is sold by the non-powered vending mechanism 17, the individual product identification unit 19 reads the identification information attached to the capsule and identifies the individual type of the capsule toy sold.

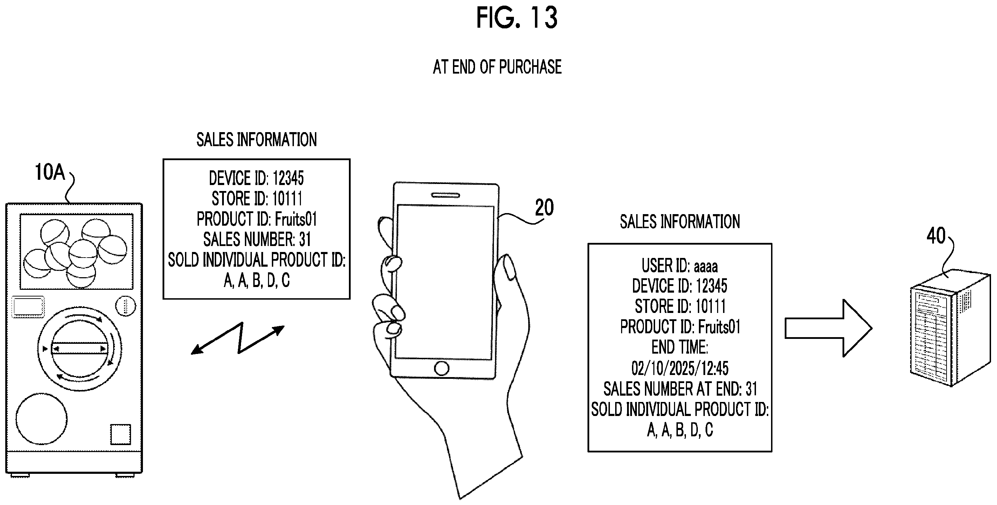

FIG. 13 shows a state in which a user who has purchased a capsule toy from the capsule toy vending machine 10A acquires sales information from the capsule toy vending machine 10A at the end of the purchase in the present exemplary embodiment.

FIG. 13 shows a state in which the user brings the mobile terminal device 20 close to the capsule toy vending machine 10A and performs a predetermined operation to acquire sales information including a sold individual product ID. Then, the sales information including information "A, A, B, D, C" which is a sold individual product ID is added with the user ID of the user and the time information at the end of purchase, and the information is transferred to the server device 40.

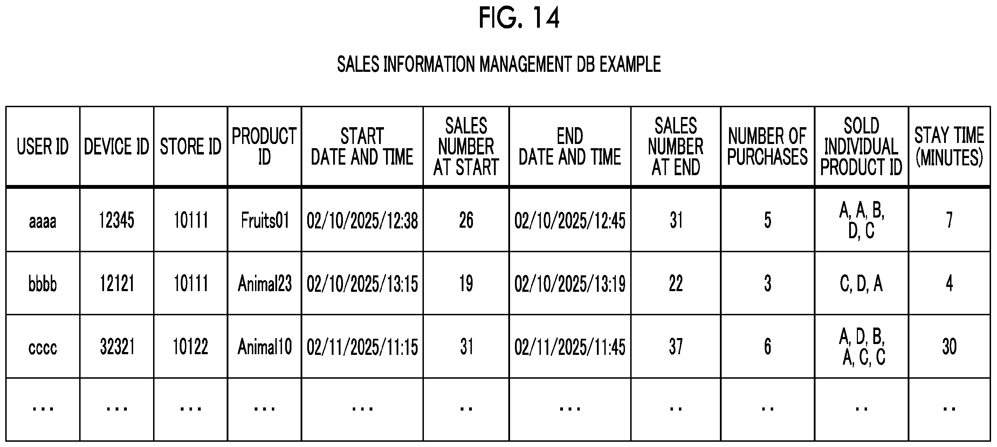

Next, FIG. 14 shows an example of the sales information management DB stored in the sales information management DB storage unit 55 of the server device 40 in the present exemplary embodiment.

Referring to FIG. 14, the sales information management DB shows a state in which not only the product IDs of the capsule toys purchased by the user, but also individual product IDs indicating the individual types of the capsule toys purchased are stored for each user.

By ascertaining the individual types of capsule toys purchased for each user in this way, it is possible to respond to users who have duplicate purchases of the identical individual type. For example, it is possible to give a special benefit to users who have duplicate purchases of the identical individual type.

In addition, business operators that manufacture capsule toys can infer the individual types that users are looking for, and can use this information in planning future products.

In addition, the store side can ascertain the imbalance of individual types of capsule toys in inventory, and adjust the individual types at the time of ordering to balance the individual types at the time of replenishing capsule toys. Accordingly, it is possible to prevent user complaints that the same individual types keep appearing.

In addition, by bringing the mobile terminal device 20 close to the capsule toy vending machine 10 before the user purchases a capsule toy, information about the individual type that was most recently dispensed can be displayed on the application screen. In this way, it is expected that users' willingness to purchase capsule toys will increase.

In the first and second exemplary embodiments described above, it is assumed that the mobile terminal device 20 is located within a communicable area of the mobile communication network 50. Therefore, in a case in which the mobile terminal device 20 is located outside the communicable area of the mobile communication network 50, the sales information cannot be transmitted to the server device 40.

In this case, the acquired sales information may be stored in the mobile terminal device 20, and the stored sales information may be transmitted to the server device 40 in a case in which the mobile terminal device 20 moves into a communicable area of the mobile communication network 50. Then, the sales information transmitted from the mobile terminal device 20 to the server device 40 includes time information at which the sales information has been acquired. Therefore, even in a case in which the timing of transmitting the acquired sales information to the server device 40 is delayed, no problem occurs in the server device 40.

Furthermore, since the stay time of the user is calculated based on the time information, it is also possible to determine the likelihood of fraudulent detection or erroneous detection.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

In the exemplary embodiments described above, the operation of the processor may not only be performed by one processor, but may also be performed by a plurality of processors which are located physically apart from each other cooperatively. Also, the order of each operation of the processor is not limited to one described in the exemplary embodiments described above, and may be changed as appropriate.

The "system" in the present exemplary embodiment includes both a system that is configured by a plurality of apparatuses and a system that is configured by a single apparatus.

The present disclosure can also be applied to a program and a program product.

### [Modification Example]

In the above exemplary embodiment, a case has been described in which sales information is acquired from a capsule toy vending machine that sells capsule toys in which a toy is enclosed in a capsule, but the present disclosure is not limited thereto. The disclosed technology can also be similarly applied to the case in which sales information is acquired from a capsule product vending machine that sells capsule products in which a product other than a toy is enclosed in a capsule.

### [Supplementary Notes]

(((1))) An information processing system comprising:
   a mobile terminal device including a first processor configured to:
      acquire sales information of a capsule product sold by a vending machine that is not connected to a commercial power supply and sells a capsule product in which a product is enclosed in a capsule via a near field communication line from the vending machine, and transmit the sales information together with user information of the mobile terminal device to an external device; and
   a server device including a second processor configured to:
      provide each user, via the mobile terminal device, with information about a store in which the capsule product or the vending machine that sells the capsule product is installed, using the user information and the sales information transmitted by the mobile terminal device.
(((2))) The information processing system according to (((1))), wherein the second processor is configured to:
   provide each user, via the mobile terminal device, with information about capsule products similar to capsule products previously purchased by users ascertained by the sales information transmitted by the mobile terminal device.
(((3))) The information processing system according to (((2))), wherein the second processor is configured to:
   provide each user, via the mobile terminal device, with information about a store in which a vending machine that sells the capsule product about which the information has been provided to the user is installed.
(((4))) The information processing system according to any one of (((1))) to (((3))), wherein the sales information includes identification information of the vending machine from which the sales information has been acquired, identification information of the capsule product sold by the vending machine, identification information of the store in which the vending machine is installed, and information about a sales number of capsule products sold by the vending machine.
(((5))) The information processing system according to any one of (((1))) to (((4))), further comprising:
   at least one vending machine that includes a third processor, and an identification unit that identifies an individual type of a sold capsule product, and that is not connected to a commercial power supply and sells a capsule product,
   wherein the third processor is configured to include information about the individual type of the capsule product identified by the identification unit in the sales information and store the sales information in a storage unit that stores information to be transmitted to the mobile terminal device.
(((6))) The information processing system according to (((5))), wherein the identification unit identifies the individual type of the capsule product by reading information of a wireless IC tag enclosed in the capsule.
(((7))) The information processing system according to (((5))), wherein the identification unit identifies the individual type of the capsule product by reading a color of the capsule of the sold capsule product.
(((8))) The information processing system according to (((5))), wherein the identification unit identifies the individual type of the capsule product by reading identification information attached to the capsule of the sold capsule product.
(((9))) A program for causing a computer to execute:
   acquiring sales information of a capsule product sold by a vending machine that is not connected to a commercial power supply and sells a capsule product in which a product is enclosed in a capsule via a near field communication line from the vending machine, and transmitting the sales information together with user information of a mobile terminal device to an external device; and
   providing each user, via the mobile terminal device, with information about a store in which the capsule product or the vending machine that sells the capsule product is installed, using the user information and the sales information transmitted by the mobile terminal device.

With the information processing system according to (((1)))), it is possible to provide a user who purchases a capsule product with information according to a past purchase history.

With the information processing system according to (((2))), it is possible to provide a user who purchases a capsule product with information about capsule products that may match a preference of the user.

With the information processing system of (((3))), it is possible to allow a user to ascertain which store to go to in order to purchase a capsule product about which information has been provided to the user.

With the information processing system according to (((4))), it is possible to manage an inventory status of each capsule product in the store in which the vending machine is installed.

With the information processing system according to (((5))), it is possible to provide a user who purchases a capsule product with information according to the individual type of the sold capsule product.

With the information processing system according to (((6))), it is possible to identify the individual type of the sold capsule product simply by enclosing a wireless IC tag inside the capsule.

With the information processing system according to (((7))), it is possible to identify the individual type of the sold capsule product simply by changing the color of the capsule for each individual type of the capsule product.

With the information processing system according to (((8))), it is possible to identify the individual type of the sold capsule product simply by attaching identification information for each individual type of the capsule product to the capsule.

With the program according to (((9))), it is possible to provide a user who purchases a capsule product with information according to a past purchase history.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: capsule toy vending machine
11: CPU
13: sales information storage unit
14: battery
15: NFC communication device
16: sales number counting unit
17: non-powered vending mechanism
18: control bus
19: individual product identification unit
20: mobile terminal device
21: CPU
22: memory
23: storage device
24: mobile communication device
25: NFC communication device
26: user interface device
27: control bus
30: Internet
31: operation input unit
32: display unit
33: control unit
34: data storage unit
40: server device
41: CPU
42: memory
43: storage device
44: communication interface
45: user interface device
46: control bus
50: mobile communication network
51: operation input unit
52: display unit
53: data transmission/reception unit
54: control unit
55: sales information management DB storage unit
60: store

## Claims

1. An information processing system comprising:
a mobile terminal device including a first processor configured to:
acquire sales information of a capsule product sold by a vending machine that is not connected to a commercial power supply and sells a capsule product in which a product is enclosed in a capsule via a near field communication line from the vending machine, and transmit the sales information together with user information of the mobile terminal device to an external device; and
a server device including a second processor configured to:
provide each user, via the mobile terminal device, with information about a store in which the capsule product or the vending machine that sells the capsule product is installed, using the user information and the sales information transmitted by the mobile terminal device.

2. The information processing system according to claim 1, wherein the second processor is configured to:
provide each user, via the mobile terminal device, with information about capsule products similar to capsule products previously purchased by users ascertained by the sales information transmitted by the mobile terminal device.

3. The information processing system according to claim 2, wherein the second processor is configured to:
provide each user, via the mobile terminal device, with information about a store in which a vending machine that sells the capsule product about which the information has been provided to the user is installed.

4. The information processing system according to any one of claims 1 to 3,
wherein the sales information includes identification information of the vending machine from which the sales information has been acquired, identification information of the capsule product sold by the vending machine, identification information of the store in which the vending machine is installed, and information about a sales number of capsule products sold by the vending machine.

5. The information processing system according to any one of claims 1 to 4, further comprising:
at least one vending machine that includes a third processor, and an identification unit that identifies an individual type of a sold capsule product, and that is not connected to a commercial power supply and sells a capsule product,
wherein the third processor is configured to include information about the individual type of the capsule product identified by the identification unit in the sales information and store the sales information in a storage unit that stores information to be transmitted to the mobile terminal device.

6. The information processing system according to claim 5,
wherein the identification unit identifies the individual type of the capsule product by reading information of a wireless IC tag enclosed in the capsule.

7. The information processing system according to claim 5,
wherein the identification unit identifies the individual type of the capsule product by reading a color of the capsule of the sold capsule product.

8. The information processing system according to claim 5,
wherein the identification unit identifies the individual type of the capsule product by reading identification information attached to the capsule of the sold capsule product.

9. A program for causing a computer to execute:
acquiring sales information of a capsule product sold by a vending machine that is not connected to a commercial power supply and sells a capsule product in which a product is enclosed in a capsule via a near field communication line from the vending machine, and transmitting the sales information together with user information of a mobile terminal device to an external device; and
providing each user, via the mobile terminal device, with information about a store in which the capsule product or the vending machine that sells the capsule product is installed, using the user information and the sales information transmitted by the mobile terminal device.

10. An information processing method comprising:
acquiring sales information of a capsule product sold by a vending machine that is not connected to a commercial power supply and sells a capsule product in which a product is enclosed in a capsule via a near field communication line from the vending machine, and transmitting the sales information together with user information of a mobile terminal device to an external device; and
providing each user, via the mobile terminal device, with information about a store in which the capsule product or the vending machine that sells the capsule product is installed, using the user information and the sales information transmitted by the mobile terminal device.
